(19) **Europäisches Patentamt / European Patent Office / Office européen des brevets**

(11) **EP 1 734 089 B1**

(12) **EUROPEAN PATENT SPECIFICATION**

(45) Date of publication and mention
of the grant of the patent:
**10.02.2010 Bulletin 2010/06**

(51) Int Cl.:
***C09D 123/28*** *(2006.01)*    ***C09D 133/04*** *(2006.01)*
***C09D 175/04*** *(2006.01)*

(21) Application number: **05727608.1**

(22) Date of filing: **01.04.2005**

(86) International application number:
**PCT/JP2005/006486**

(87) International publication number:
**WO 2005/097928 (20.10.2005 Gazette 2005/42)**

(54) **MATTE COATING COMPOSITION**

MATTBESCHICHTUNGSMASSE

COMPOSITION DE REVÊTEMENT DE MATTE

(84) Designated Contracting States:
**DE**

(30) Priority: **05.04.2004   JP 2004110892**

(43) Date of publication of application:
**20.12.2006   Bulletin 2006/51**

(73) Proprietor: **Origin Electric Company Ltd
Tokyo 171-8555 (JP)**

(72) Inventors:
• **IKEDA, Toshikazu
c/o Toyota Motor Corporation
Toyota-shi, Aichi 471-8571 (JP)**

• **KOYANAKA, Osamu
c/ Origin Electric Company Limited
Toshima-ku, Tokyo 171-8555 (JP)**

(74) Representative: **Berkenbrink, Kai-Oliver et al
Turmstrasse 22
40878 Ratingen (DE)**

(56) References cited:
**EP-A- 0 368 164      EP-A- 0 721 001
JP-A- 2002 188 043    JP-A- 2002 188 045
JP-A- 2004 051 901    JP-A- 2004 099 700
JP-A- 2005 139 273    US-B1- 6 245 695**

**Description**

TECHNICAL FIELD

The present invention relates to a matte coating composition which is preferably used to coat polyolefin materials.

BACKGROUND ART

Polyolefin materials such as polypropylene (abbreviated as "PP resin" below) and polyolefin based thermoplastic elastomer (abbreviated as "TPO resin" below) are used as interior materials for an automobile such as an instrument panel, airbag cover, and dashboard.
These interior materials for automobiles are required to have low gloss in order to ensure the visibility of drivers. Therefore, these interior materials are subjected to a matte treatment using a matte coating for interior materials of automobiles.
It is required for a matte coating used for interior materials of automobiles to have adhesion to polyolefin materials to which coating is difficult. Therefore, for example, a composition comprising acrylic modified chlorinated polypropylene resin having adhesion to polyolefin materials as a binder resin, an inorganic extender pigment such as silica and talc, and a matte agent such as acrylic resin particles, which is disclosed in Japanese Unexamined Patent Application, First Publication No. Hei 07-76646, is used as a matte coating for polyolefin material.
However, since a coating film obtained by a matte coating comprising an inorganic extender pigment or acrylic resin particles is hardened due to the inorganic extender pigment or the acrylic resin particles, when the inorganic extender pigment or the acrylic resin particles which exist ununiformly on the surface of the coating are removed by a nail while someone touches the coating with their fingers, not only the portion where the inorganic extender pigment or the acrylic resin particles are removed is dented and marked, but also the gloss of the portion increases due to loss of the matte agent. As a result, there is a problem in that whitening occurs on the surface of the coating, or an optical scratch remains.
In addition, when the coating is scrubbed by a nail, the coating itself dents and is easily marked when the inorganic extender pigment or the acrylic resin particles are not removed. Then, the coating does not have restoring properties, and a scrubbed portion is kept dented, and remains as a mark.

DISCLOSURE OF THE INVENTION

PROBLEMS TO BE SOLVED

The object of the present invention is to provide a matte coating composition which has excellent adhesion to polyolefin materials and which provides a coated film having excellent anti-damage properties.

MEANS FOR SOLVING THE PROBLEM

In order to achieve the object, the present invention provides a matte coating composition comprising a binder resin including acrylic modified chlorinated polypropylene (a), urethane resin (b), and a compatibilizer (c), and urethane resin particles (d),
wherein an average 10% strength of the urethane resin particles (d) is in a range from 0.25 to 1.50 kgf/mm$^2$;
the acrylic modified chlorinated polypropylene (a) contains acrylic resin (a1) and chlorinated polypropylene (a2);
when a total content of the acrylic resin (a1), the compatibilizer (c), and the urethane resin (b) is 100% by mass, a total content of the acrylic resin (a1) and the compatibilizer (c) is in a range from 50 to 65% by mass, and a content of the urethane resin (b) is in a range from 35 to 50% by mass; and
when a content of the binder resin is 100% by mass, a content of the chlorinated polypropylene (a2) is in a range from 10 to 25% by mass, and a content of the urethane resin particles (d) is in a range from 25 to 40% by mass.
In the matte coating composition, it is preferable that an average particle diameter of the urethane resin particles (d) be in a range from 6 to 12 μm.
It is preferable that a glass transition temperature of the acrylic resin (a1) be in a range from 60 to 100ºC.
It is also preferable that a glass transition temperature of the compatibilizer (c) be in a range from 80 to 100ºC, and that the compatibilizer (c) be a comb type polymer having a hydrophilic monomer as a side chain and a hydrophobic monomer as a main chain.

EFFECTS OF THE PRESENT INVENTION

The matte coating composition of the present invention comprises a binder resin including acrylic modified chlorinated polypropylene (a), urethane resin (b), and a compatibilizer (c), and urethane resin particles (d), wherein an average 10% strength of the urethane resin particles (d) is in a range from 0.25 to 1.50 $kgf/mm^2$; the acrylic modified chlorinated polypropylene (a) contains acrylic resin (a1) and chlorinated polypropylene (a2); when a total content of the acrylic resin (a1), the compatibilizer (c), and the urethane resin (b) is 100% by mass, a total content of the acrylic resin (a1) and the compatibilizer (c) is in a range from 50 to 65% by mass, and a content of the urethane resin (b) is in a range from 35 to 50% by mass; and when a content of the binder resin is 100% by mass, a content of the chlorinated polypropylene (a2) is in a range from 10 to 25% by mass, and a content of the urethane resin particles (d) is in a range from 25 to 40% by mass. Therefore, the matte coating composition of the present invention is excellent in adhesion to polyolefin material and provides a coated film having excellent anti-damage properties.

When an average particle diameter of the urethane resin particles (d) is in a range from 6 to 12 $\mu$m, a resulting coated film has further improved anti-damage properties and an excellent appearance.

When a glass transition temperature of the acrylic resin (a1) is in a range from 60 to 100ºC, a resulting coated film has improved anti-staining properties to fat and fatty oil.

In addition, when a glass transition temperature of the compatibilizer (c) is in a range from 80 to 100ºC, and the compatibilizer (c) is a comb type polymer having a hydrophilic monomer as a side chain and a hydrophobic monomer as a main chain, stability of the matte coating composition is improved and anti-staining properties to fat and fatty oil are also improved.

## BRIEF DESCRIPTION OF THE DRAWINGS

[FIG. 1] Fig. 1 is a cross-sectional view showing one example of a coated film obtained by the matte coating composition of the present invention.

[FIG. 2] Fig. 2 is a cross-sectional view showing the coated film in which a recess is formed by pressure applied to the coated film.

[FIG. 3] Fig. 3 is a cross-sectional view showing the coated film in which the recess is disappeared by restoring properties of the coated film.

## EXPLANATION OF REFERENCE SYMBOLS

2: urethane resin particles (d)

## BEST MODE FOR CARRYING OUT THE INVENTION

Below, the present invention will be explained in detail.

Acrylic modified chlorinated polypropylene (a)

Acrylic modified chlorinated polypropylene (a) used in the present invention is a graft copolymer which is obtained by graft copolymerizing an acrylic monomer to chlorinated polypropylene. The acrylic modified chlorinated polypropylene (a) obtained in this manner contains unmodified chlorinated polypropylene which does not form a graft copolymer and acrylic resin which does not bond to chlorinated polypropylene. In the present invention, chlorinated polypropylene and acrylic resin which do not form a graft copolymer are denoted by respectively chlorinated polypropylene (a2) and acrylic resin (a1). The acrylic modified chlorinated polypropylene containing chlorinated polypropylene (a2) and acrylic resin (a1) is denoted by acrylic modified chlorinated polypropylene (a) in the present invention.

Examples of an acrylic monomer forming the acrylic resin (a1) include alkyl esters of acrylic acids or methacrylic acids such as methyl acrylate, ethyl acrylate, propyl acrylate, isopropyl acrylate, butyl acrylate, hexyl acrylate, octyl acrylate, lauryl acrylate, methyl methacrylate, ethyl methacrylate, propyl methacrylate, isopropyl methacrylate, butyl methacrylate, hexyl methacrylate, octyl methacrylate, and lauryl methacrylate; alkoxyalkyl esters of acrylic acids or methacrylic acids such as methoxybutyl acrylate, methoxybutyl methacrylate, methoxyethyl acrylate, methoxyethyl methacrylate, ethoxybutyl acrylate, and ethoxybutyl methacrylate; alkenyl esters of acrylic acids or methacrylic acids such as allyl acrylate, and allyl methacrylate; hydroxyalkyl esters of acrylic acids or methacrylic acids such as hydroxyethyl acrylate, hydroxyethyl methacrylate, hydroxybutyl acrylate, hydroxybutyl methacrylate, hydroxypropyl acrylate, and hydroxypropyl methacrylate; alkenyloxyalkyl esters of acrylic acids or methacrylic acids such as allyloxyethyl acrylate, and allyloxyethyl methacrylate; acrylamide, acrylonitrile, methacrylonitrile, acrylic acid, and methacrylic acid. These acrylic monomers can be used alone or in combination.

Other vinyl monomers may be used together with these acrylic monomers. Examples of the vinyl monomers include vinyl aromatic compounds such as a-methyl styrene, vinyl toluene, and p-chlorstyrene; olefin based compounds such as butadiene, isoprene, and chloroprene; vinyl acetate, allyl alcohol, and maleic acid.

It is preferable that the glass transition temperature (Tg) of the acrylic resin (a1) be in a range from 60 to 100ᵒC. If the Tg is less than 60ᵒC, there is possibility that the anti-staining properties to fat and fatty oil of the resulting coated film may be degraded. In contrast, if the Tg exceeds 100ᵒC, there is a possibility that the resulting coated film may harden, and anti-damage properties may be degraded. Here, when the acrylic resin (a1) is a copolymer comprising monomers a, b, c, ···, the glass transition temperature (Tg) of the acrylic resin (a1) is calculated by the following formula:

$$1/Tg = m_a/Tg_a + m_b/Tg_b + m_c/Tg_c + \cdots$$

wherein $m_a$ is a mass fraction of monomer a, $Tg_a$ is Tg [k] of a polymer comprising only monomer a,
$m_b$ is a mass fraction of monomer b, $Tg_b$ is Tg [k] of a polymer comprising only monomer b, and
$m_c$ is a mass fraction of monomer a, $Tg_c$ is Tg [k] of a polymer comprising only monomer c.

The chlorinated polypropylene (a2) is polypropylene modified with chlorine, and generally comprises chlorine in a range from 20 to 40% by mass.
The acrylic modified chlorinated polypropylene (a) is obtained by heating a mixture comprising chlorinated polypropylene, acrylic monomer, and a polymerization initiator, and if necessary, an organic solvent to graft polymerize the acrylic monomer to the chlorinated polypropylene.
Any polymerization initiator which is used to a radical polymerization conducted in an organic solvent can be used. Examples of the polymerization initiator include peroxides such as benzoyl peroxide, and t-butyl-oxy-2-ethylhexanoate; and azo compounds such as azobisisobutylonitrile and azobisdimethylvalerolnitrile.

Examples of the acrylic modified chlorinated polypropylene (a) which is commercially available include SUPERCHLON ® 240H and SUPERCHLON ® 223M (marketed by Nippon Paper Chemicals) and HARDLEN ® B13 (marketed by Toyo Kasei Kogyo Co., Ltd.).

Urethane resin (b)

In the present invention, urethane resin (b) is used as a binder resin. Dissimilar to the urethane resin particles (d) which are explained below, the urethane resin (b) can be dissolved in an organic solvent.

The urethane resin (b) can be obtained by a reaction between a polyol compound and a polyisocyanate compound.
Since urethane resin having high rupture elongation and rupture strength can be obtained, polyester based polyol compounds, polyether based polyol compounds, and polycarbonate based polyol compounds are preferably used as the polyol compound.

Examples of the polyester polyol compounds include products obtained by an ester reaction between polycarboxylic acid and polyalcohol. Examples of polycarboxylic acid include phthalic acid, isophthalic acid, tetrahydrophthalaic acid, maleic acid, fumaric acid, metaconic acid, citraconic acid, itaconic acid, adipic acid, and cebacic acid. These polycarboxylic acids can be used alone or in combination. Examples of polyalcohol include ethylene glycol, dimethylene glycol, triethylene glycol, propylene glycol, 1,6-hexadiol, trimethylolpropane, glycerin, pentaerythritol, cyclohexanedimethanol, bishydroxyethoxybenzene, N-alkyldiethanol amine, and multimeric complex (dimmer, trimer, and the like) theseof. These polyalcohols can be used alone or in combination.

As the polyether based polyol compounds, any product, which is obtained by an additional polymerization of alkylene oxide such as ethylene oxide, propylene oxide, butylenes oxide, and styrene oxide to the polyalcohol, can be used.
Examples of the polycarbonate based polyol compound include polytetramethylene carbonate diol, polyhexamethylene carbonate diol, and poly-1,4-cyclohexanemethylene carbonate diol. These polyol compounds can be used alone or in combination.

Examples of the polyisocyanate compound include reaction products between organic diisocyanate such as hexamethylene diisocyanate, methxylene diisocyanate, tolylene diisocyanate, isophorone diisocyanate, 4,4-methylene bis(cyclohexylisocyanate), dimeric diisocyanate, and polyalcohol. These polyisocyanates can be used alone or in combination.

The rupture strength of the urethane resin (b) is preferably 6 MPa or more, from the viewpoint of anti-damage properties of the resulting coated film. The rupture elongation of the urethane resin (b) is preferably 800% or more, from the viewpoint of softness of the resulting coated film. Here, rupture strength and rupture elongation are strength and elongation when a film which has a thickness of about 100 μm and which is made of only urethane resin is pulled at a rate of 50 mm/min. using a tensile tester until it is ruptured.

Examples of the urethane resin (b) obtained using a polyester polyol which are commercially available include KL494 and KL540B (marketed by Arakawa Chemical Industries Ltd.) and DESMOLACK ® 4340 (marketed by Sumitomo Bayer Co. Ltd.).
An example of the urethane resin (b) obtained using a polyether polyol which is commercially available include KL422 (marketed by Arakawa Chemical Industries Ltd.).
An example of the urethane resin (b) obtained using a polycarbonate polyol which is commercially available include PU5715 (marketed by Arakawa Chemical Industries Ltd.).

Compatibilizer (c)

The compatibilizer (c) is preferably a comb type acrylic polymer having a polymer comprising hydrophilic monomers as a side chain and a polymer comprising a hydrophobic monomer as a main chain. The compatibilizer (c) forms a sea-island structure in a coated film to improve the stability of the coating. Here, the hydrophilic monomer comprises hydrophilic monomer, such as hydroxyalkyl ester of acrylic acid or methacrylic acid, acrylic acid, and methacrylic acid among the above-mentioned acrylic based monomers and vinyl based resins, as a main component. The hydrophobic monomer comprises hydrophilic monomer, such as alkyl ester of acrylic acid or methacrylic acid, and styrene among the above-mentioned acrylic based monomers and vinyl based resins, as a main component.
In addition, the glass transition temperature of the compatibilizer (c) is preferably in a range from 80 to 100ºC. If the glass transition temperature is less than 80ºC, the anti-staining properties to fat and fatty oil of the coated film may be degraded. In contrast, if it exceeds 100ºC, the rupture elongation of the coated film may be decreased.
Examples of the compatibilizer (c) include RESEDA ® GC360 and RESEDA ® GP310S (Toagosei Co., Ltd.).

Urethane resin particles (d)

The urethane resin particles (d) are in a bead shape, and are obtained by cross-linking urethane resin. The urethane resin particles (d) have a larger molecular weight than that of the urethane resin (b), and are not dissolved in an organic solvent.
The average particle diameter of the urethane resin particles (d) is preferably in a range from 6 to 12 $\mu$m. If the average particle diameter is less than 6 $\mu$m, the urethane resin particles (d) sink in the coated film, and matte effects may not be obtained. In contrast, if it exceeds 12 $\mu$m, the surface of the coated film is rough. In addition, since a number of abrasion contacting points increases, the urethane resin particles (d) are easily removed from the coated film by rubbing.
The 10% average strength of the urethane resin particles (d) is preferably in a range from 0.25 to 1.50 kgf/mm$^2$. If the 10% average strength is less than 0.25 kgf/mm$^2$, since elasticity is insufficient, the urethane resin particles (d) are easily crushed, and the gloss of the portion that the urethane resin particles (d) are crushed may increase. In contrast, if it exceeds 1.50 kgf/mm$^2$, the coated film hardens and the urethane resin particles (d) are easily removed.
Here, "10% average strength" is an average value of five weights applied to the urethane resin particles (d) such that the particle diameter deforms by 10% in a compression test for fine particles using a fine compression tester MCTM-500 marketed by Shimadzu Corporation.
Commercial cross-linked urethane resin particles are classified into a super soft class, soft class, hard class, and intermediate class (medium class) between the soft class and the hard class. The urethane resin particles having 0.25 to 1.50 kgf/mm$^2$ of the 10% average strength correspond approximately to the medium class. Examples of the urethane resin particles (d) which are commercially available include ART PEARL ® CT630T and ART PEARL ® U600T (marketed by Negami Chemical Industrial Co., Ltd.) and BURNOCK ® CFB-101-40 (marketed by Dainippon Ink and Chemicals Incorporated).

Matte coating composition

The matte coating composition of the present invention comprises the binder resin including the acrylic modified chlorinated polypropylene (a), the urethane resin (b), and the compatibilizer (c), and the urethane resin particles (d).
When a total content of the acrylic resin (a1), the compatibilizer (c), and the urethane resin (b) is 100% by mass, a total content of the acrylic resin (a1) and the compatibilizer (c) is in a range from 50 to 65% by mass, and a content of the urethane resin (b) is in a range from 35 to 50% by mass.
If the total content of the acrylic resin (a1) and the compatibilizer (c) is less than 50% by mass, that is, if the content of the urethane resin (b) exceeds 50% by mass, the anti-staining properties to fat and fatty oil of the resulting coated film is degraded. In contrast, the total content of the acrylic resin (a1) and the compatibilizer (c) exceeds 65% by mass, that is, if the content of the urethane resin (b) is less than 35% by mass, the rupture strength and rupture elongation of the resulting coated film are insufficient, and anti-damage properties are degraded.
When a content of the binder resin is 100% by mass, the content of the chlorinated polypropylene (a2) is in a range from 10 to 25% by mass, and the content of the urethane resin particles (d) is in a range from 25 to 40% by mass. If the content of the chlorinated polypropylene (a2) is less than 10% by mass, adhesion to polyolefin material is insufficient.

In contrast, if it exceeds 25% by mass, the anti-staining properties to fat and fatty acid is degraded.

The content of the urethane resin particles (d) relative to 100 parts by mass of the binder resin is in a range from 25 to 40 parts by mass. If the content of the urethane resin particles (d) is less than 25 parts by mass, matte effects are insufficient, and target gloss cannot be obtained. In contrast, if it exceeds 40 parts by mass, compatibility to the binder resin decreases, and strength of the coated film may decrease.

The content of the compatibilizer (c) with respect to the total content (100% by mass) of the acrylic modified chlorinated polypropylene (a), the urethane resin (b), and the compatibilizer (c) is preferably in a range from 20 to 40% by mass.

The matte coating composition of the present invention may comprise a coated surface adjuster, fluidity adjuster, ultraviolet absorbent, optical stabilizer, curing catalyst, extender pigment, color pigment, metallic pigment, and the like, if necessary.

The matte coating composition of the present invention is prepared as an organic solvent based coating by mixing these components to an organic solvent so as to be a target solid concentration. Examples of the organic solvent include ketone based solvents such as acetone, methyl ethyl ketone, dimethyl ethyl ketone; ester based solvents such as ethyl acetate and butyl acetate; carbon hydride based solvents such as toluene, xylene, and naphtha, which are generally used as an organic solvent based coating.

The matte coating composition of the present invention provides a coated film having excellent anti-damage properties for the following reasons.

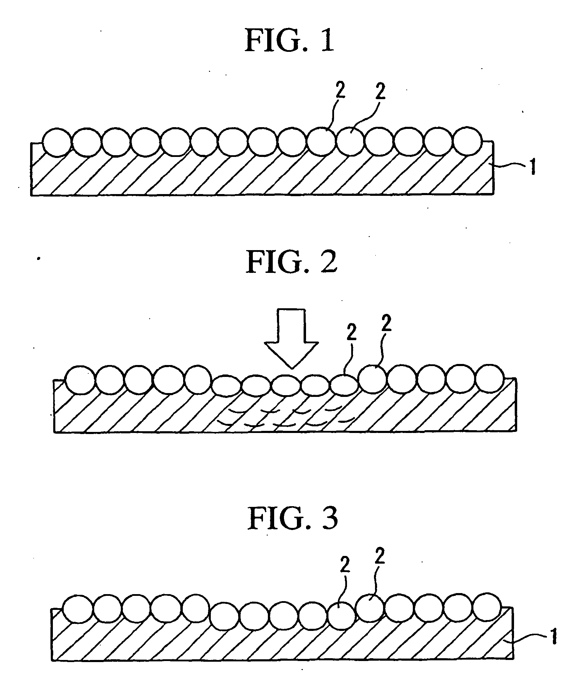

In the coated film obtained by the matte coating composition of the present invention, the urethane resin particles (d) 2 exist ununiformly at the surface 1 thereof, as shown in Fig. 1. The coated film 1 has elasticity because comprising the urethane resin (b) having high rupture strength as a binder resin. Therefore, as shown in Fig. 2, when force is applied to the coated film 1, for example, when the coated film 1 is rubbed, since the force is absorbed to the coated film 1 and the urethane resin particles (d) 2 having elasticity, the urethane resin particles (d) 2 are hardly scrapped off, and the coated film 1 is hardly damaged.

The urethane resin (b) and the urethane resin particles (d) are made of the same resin. Therefore, there is strong affinity between the coated film 1 and the urethane resin particles (d) 2, and they are adhered tightly. In addition, since the urethane resin (b) has high rupture elongation, the obtained coated film 1 easily stretches. Therefore, if force is applied to the urethane resin particles (d) 2 in the direction parallel to the surface of the coated film 1, the coated film 1 closely adhered with the urethane resin particles (d) 2 stretches so as to follow the movement of the urethane resin particles (d) 2, and the urethane resin particles (d) 2 are hardly scrapped off.

In addition, since the urethane resin (b) and the urethane resin particles (d) 2 have high rupture strength and elasticity, as shown in Fig. 2, the coated film 1 and the urethane resin particles (d) 2 are dented by force, for example, by the force generated by rubbing. Even if the dent portion is temporarily marked, the dent is disappeared by restoring properties due to elasticity, and the mark hardly remains. The coated film of the matte coating composition of the present invention is hardly damaged.

Since the matte coating composition of the present invention comprises the acrylic modified chlorinated polypropylene (a), the composition has excellent adhesion to polyolefin material. In addition, since the matte coating composition comprises the acrylic resin (a1) in the acrylic modified chlorinated polypropylene (a) and the compatibilizer (c), the compatibility between the acrylic modified chlorinated polypropylene (a) and the urethane resin (b) is high. Therefore, it is possible to sufficiently incorporate the high rupture strength and rupture elongation of the urethane resin (b) to the coated film, and to sufficiently exert the anti-damage properties of the coated film.

EXAMPLES

Below, the present invention will be explained in detail with reference to an example and comparative examples. The components used in Example are explained below.

Acrylic modified chlorinated polypropylene (a)

SUPERCHLON ® 240H (marketed by Nippon Paper Chemical Co., Ltd.; chlorine content: 4.4% by mass; solid component: 30% by mass; mass average molecular weight: 70,000 to 90,000; acrylic resin (a1) content: 80% by mass; chlorinated polypropylene (a2) content: 20% by mass; Tg of the acrylic resin (a1): 100 ºC)
HARDLEN ® B13 (marketed by Toyo Kasei Kogyo Co., Ltd.; chlorine content: 16% by mass; solid component: 30% by mass; mass average molecular weight: 70,000 to 90,000; acrylic resin (a1) content: 40% by mass; chlorinated polypropylene (a2) content: 60% by mass; Tg of the acrylic resin (a1): 60 ºC)

Urethane resin (b)

KL494(marketed by Arakawa Chemical Industries Ltd.; containing polyester polyol; rupture strength: 14.7 MPa;

rupture elongation: 800%; solid content: 30% by mass; mass average molecular weight: 30,000; Tg: -10 ºC)

Compatibilizer (c)

RESEDA ® GC360 (Toagosei Co., Ltd.; a comb type acrylic polymer; solid content: 45% by mass; mass average molecular weight: 20,000 to 25,000)

Urethane resin particles (d)

ART PEARL ® CT630T (marketed by Negami Chemical Industrial Co., Ltd.; average particle diameter: 6 to 8 μm; average 10% strength: 0.55 kgf/mm$^2$)

Example 1

25% by mass of SUPERCHLON ® 240H, 20% by mass of HARDLEN ® B13, 35% by mass of KL494, and 20% by mass of RESEDA ® GC360 were sufficiently mixed using a disper, and then the mixture was diluted with toluene such that the solid content of the binder resin be 20% by mass to obtain a clear coating (I).
In the clear coating (I), the urethane resin (b)/[acrylic resin (a1) + compatibilizer (c) + urethane resin (b)] (mass ratio) was 40/100. The content of the chlorinated polypropylene (a2) with respect to the solid content of the binder resin (100% by mass) was 15% by mass.
In order to achieve a target gloss of 60º, 30 parts by mass of medium class urethane resin particles (ART PEARL ® CT630T) were added to 100 parts by mass of the solid content of the obtained clear coating (I), and they were sufficiently mixed using a disper to obtain a matte coating (I).
The obtained matte coating (I) was diluted with a carbon hydride based solvent such that the diluted viscosity be 14 seconds (measured using a ford cup FC4). The diluted coating was coated to the surface of a polypropylene (PP) resin plate (thickness: 30 mm) in a coating grade using a spray gun (ANEST IWATA W-61) such that the thickness of the coated film be 20 μm. After that, the coated film was obtained by drying at 70 ºC for 10 minutes in a hot-wind forced drying oven.
In the same way, the coated film was formed on the surface of an olefin based thermoplastic elastomer (TPO) plate (thickness: 30 mm).
These coated films were evaluated as follows. The results are shown in Table 1.

60 º gloss value

The gloss (60 º gloss) at the surface of the matte coated films was measured using a BYK microtrigloss meter (marketed by Toyo Seiki Seisaku-Sho. Ltd.). As explained above, the target gloss value of the matte coated film was 1.0.

Appearance of the coated film

The surface of the coated film was visually observed. The results were evaluated by the following two-rank criteria.

> Good: There is no irregularity at the surface of the coated film and there is matte feeling.
> Irregularity: There is irregularity at the surface of the coated film and no matte feeling.

Adhesion

The surface of the coated film was cut using a cutter so as to make grids (interval: 1 mm; 100 grids), and then a cellophane tape was adhered closely to the surface of the coated film. Then, the cellophane tape was peeled directly above from the surface of the coated film. After that, the conditions of the surface of the coated film were observed, and evaluated by the following three-rank criteria. Moreover, both the adhesion to PP material and TPO material were evaluated.

> Excellent: Defects and peeling were not observed.
> Fair: Defects were observed.
> Bad: Peeling was observed.

Flexibility

The TPO plate with the coated film was wound around a metal bar having a diameter of 10 f so that he coated surface faced inward. After that, cracks at the surface of the coated film were observed, and evaluated by the following three-rank criteria.

| | |
|---|---|
| Excellent: | Cracks were not observed. |
| Fair: | Insensible cracks were observed. |
| Bad: | Cracks (with cracking noise) were clearly observed. |

Anti-damage properties

A wearing pin coated with a gauze of a slide type wear tester was contacted to the surface of the coated film with a specific load (500 g/cm$^2$), and the wearing pin was slid back and forth a specific times (50 times). Then the surface of the coated film was visually observed, and the appearance of coated film (difficulty of awareness of damage) was evaluated by the following three-rank criteria. In addition, gloss at the surface of the coated film before and after the test was measured. Gloss after the test was shown as a gloss increasing percentage which was calculated by assuming that the gloss before the test to 100%. The larger the gloss increasing percentage is, the surface of the coated film became whiter. Furthermore, recovery properties were evaluated based on the results of the observation and the gloss increasing percentage.

Appearance evaluation:

| | |
|---|---|
| Excellent: | Damage was not visible. (Gloss increasing percentage: less than 130%). |
| Fair: | Damage was somewhat visible. (Gloss increasing percentage: less than 160%). |
| Bad: | Damage was highly visible. (Gloss increasing percentage: exceeds 160%). |

Recovery properties evaluation:

| | |
|---|---|
| Excellent: | The coated film had sufficient elasticity and restored. (Gloss increasing percentage: less than 120%). |
| Fair: | The coated film had elasticity and restored. (Gloss increasing percentage: less than 150%). |
| Bad: | The coated film had no elasticity and recessed damage remained. (Gloss increasing percentage: exceeds 160%). |

Anti-staining properties to fat and fatty oil
After coating fat (for example, beef fat) on the surface of the coated film, the coated film was kept in a constant-temperature oven at a specific temperature for a specific time. After that, the surface of the coated film was visually observed, and evaluated by the following three-rank criteria. Relative merits to adhesion of the coated film to fat and fatty acid were evaluated by this test.

| | |
|---|---|
| Excellent: | There is no defect in the coated film. |
| Fair: | Cracks were generated in the coated film. |
| Bad: | Peeling was generated in the coated film. |

Comparative Example 1

25% by mass of SUPERCHLON ® 240H, 18% by mass of HARDLEN ® B13, 52% by mass of KL494, and 5% by mass of RESEDA ® GC360 were sufficiently mixed using a disper, and then the mixture was diluted with toluene such that the solid content of the binder resin be 20% by mass to obtain a clear coating (II).
In the clear coating (II), the urethane resin (b)/[acrylic resin (a1) + compatibilizer (c) + urethane resin (b)] (mass ratio) was 60/100. The content of the chlorinated polypropylene (a2) with respect to the solid content of the binder resin (100% by mass) was 15% by mass.

In order to achieve a target gloss of 60 º, 30 parts by mass of medium class urethane resin particles (ART PEARL ® CT630T) were added to 100 parts by mass of solid content of the obtained clear coating (II), and they were sufficiently mixed using a disper to obtain a matte coating (II).

Then, similarly to Example 1, the obtained matte coating (II) was evaluated.

The results are shown in Table 1.

Comparative Example 2

25% by mass of SUPERCHLON ® 240H, 20% by mass of HARDLEN ® B13, 29% by mass of KL494, and 26% by mass of RESEDA ® GC360 were sufficiently mixed using a disper, and then the mixture was diluted with toluene such that the solid content of the binder resin be 20% by mass to obtain a clear coating (III).

In the clear coating (III), the urethane resin (b)/[acrylic resin (a1) + compatibilizer (c) + urethane resin (b)] (mass ratio) was 30/100. The content of the chlorinated polypropylene (a2) with respect to the solid content of the binder resin (100% by mass) was 15% by mass.

In order to achieve a target gloss of 60º, 30 parts by mass of middle hard urethane resin particles (ART PEARL ® CT630T) were added to 100 parts by mass of solid content of the obtained clear coating (III), and they were sufficiently mixed using a disper to obtain a matte coating (III).

Then, similarly to Example 1, the obtained matte coating (II) was evaluated. The results are shown in Table 1.

Comparative Example 3

20% by mass of SUPERCHLON ® 240H, 9% by mass of HARDLEN ® B13, 42% by mass of KL494, and 29% by mass of RESEDA ® GC360 were sufficiently mixed using a disper, and then the mixture was diluted with toluene such that the solid content of the binder resin be 20% by mass to obtain a clear coating (IV).

In the clear coating (IV), the urethane resin (b)/[acrylic resin (a1) + compatibilizer (c) + urethane resin (b)] (mass ratio) was 40/100. The content of the chlorinated polypropylene (a2) with respect to the solid content of the binder resin (100% by mass) was 8% by mass.

In order to achieve a target gloss of 60 º, 30 parts by mass of medium class urethane resin particles (ART PEARL ® CT630T) were added to 100 parts by mass of solid content of the obtained clear coating (IV), and they were sufficiently mixed using a disper to obtain a matte coating (IV).

Then, similarly to Example 1, the obtained matte coating (IV) was evaluated. The results are shown in Table 1.

Comparative Example 4

5% by mass of SUPERCHLON ® 240H, 50% by mass of HARDLEN ® B13, 30% by mass of KL494, and 15% by mass of RESEDA ® GC360 were sufficiently mixed using a disper, and then the mixture was diluted with toluene such that the solid content of the binder resin be 20% by mass to obtain a clear coating (V).

In the clear coating (V), the urethane resin (b)/[acrylic resin (a1) + compatibilizer (c) + urethane resin (b)] (mass ratio) was 40/100. The content of the chlorinated polypropylene (a2) with respect to the solid content of the binder resin (100% by mass) was 30% by mass.

In order to achieve a target gloss of 60 º, 30 parts by mass of medium class urethane resin particles (ART PEARL ® CT630T) were added to 100 parts by mass of solid content of the obtained clear coating (V), and they were sufficiently mixed using a disper to obtain a matte coating (V).

Then, similarly to Example 1, the obtained matte coating (V) was evaluated. The results are shown in Table 1.

Comparative Example 5

25% by mass of SUPERCHLON ® 240H, 20% by mass of HARDLEN ® B13, 35% by mass of KL494, and 20% by mass of RESEDA ® GC360 were sufficiently mixed using a disper, and then the mixture was diluted with toluene such that the solid content of the binder resin be 20% by mass to obtain a clear coating (VI).

In the clear coating (VI), the urethane resin (b)/[acrylic resin (a1) + compatibilizer (c) + urethane resin (b)] (mass ratio) was 40/100. The content of the chlorinated polypropylene (a2) with respect to the solid content of the binder resin (100% by mass) was 15% by mass.

In order to achieve a target gloss of 60 º, 30 parts by mass of soft urethane resin particles (ART PEARL ® C800; marketed by Negami Chemical Industrial Co., Ltd.; urethane resin particles; average 10% strength: 0.024 kgf/mm$^2$) were added to 100 parts by mass of the solid content of the obtained clear coating (VI), and they were sufficiently mixed using a disper to obtain a matte coating (VI).

Then, similarly to Example 1, the obtained matte coating (VI) was evaluated. The results are shown in Table 1.

Comparative Example 6

25% by mass of SUPERCHLON ® 240H, 20% by mass of HARDLEN ® B13, 35% by mass of KL494, and 20% by mass of RESEDA ® GC360 were sufficiently mixed using a disper, and then the mixture was diluted with toluene such that the binder resin solid content be 20% by mass to obtain a clear coating (VII).
In the clear coating (VII), the urethane resin (b)/[acrylic resin (a1) + compatibilizer (c) + urethane resin (b)] (mass ratio) was 40/100. The content of the chlorinated polypropylene (a2) with respect to the solid content of the binder resin (100% by mass) was 15% by mass.
In order to achieve a target gloss of 60º, 30 parts by mass of middle hard urethane resin particles (ART PEARL ® G800; marketed by Negami Chemical Industrial Co., Ltd.; acrylic resin particles; average 10% strength: 2.50 kgf/mm$^2$) were added to 100 parts by mass of solid content of the obtained clear coating (VII), and they were sufficiently mixed using a disper to obtain a matte coating (VII).
Then, similarly to Example 1, the obtained matte coating (VII) was evaluated. The results are shown in Table 1.

Comparative Example 7

25% by mass of SUPERCHLON ® 240H, 20% by mass of HARDLEN ® B13, 35% by mass of KL494, and 20% by mass of RESEDA ® GC360 were sufficiently mixed using a disper, and then the mixture was diluted with toluene such that the solid content of the binder resin be 20% by mass to obtain a clear coating (VIII).
In the clear coating (II), the urethane resin (b)/[acrylic resin (a1) + compatibilizer (c) + urethane resin (b)] (mass ratio) was 40/100. The content of the chlorinated polypropylene (a2) with respect to the solid content of the binder resin (100% by mass) was 15% by mass.
In order to achieve a target gloss of 60 º, 20 parts by mass of medium class urethane resin particles (ART PEARL ® CT630T) were added to 100 parts by mass of solid content of the obtained clear coating (VIII), and they were sufficiently mixed using a disper to obtain a matte coating (VIII).
Then, similarly to Example 1, the obtained matte coating (VIII) was evaluated. The results are shown in Table 1.

Comparative Example 8

25% by mass of SUPERCHLON ® 240H, 20% by mass of HARDLEN ® B13, 35% by mass of KL494, and 20% by mass of RESEDA ® GC360 were sufficiently mixed using a disper, and then the mixture was diluted with toluene such that the binder resin solid content be 20% by mass to obtain a clear coating (IX).
In the clear coating (IX), the urethane resin (b)/[acrylic resin (a1) + compatibilizer (c) + urethane resin (b)] (mass ratio) was 40/100. The content of the chlorinated polypropylene (a2) with respect to the solid content of the binder resin (100% by mass) was 15% by mass.
In order to achieve a target gloss of 60 º, 45 parts by mass of medium class urethane resin particles (ART PEARL ® CT630T) were added to 100 parts by mass of solid content of the obtained clear coating (IX), and they were sufficiently mixed using a disper to obtain a matte coating (IX).
Then, similarly to Example 1, the obtained matte coating (IX) was evaluated. The results are shown in Table 1.

Comparative Example 9

PLANET ® PP-7 (marketed by Origin Electric Co. Ltd.) which is a commercially available clear coating was prepared.
In the clear coating, the urethane resin (b)/[acrylic resin (a1) + compatibilizer (c) + urethane resin (b)] (mass ratio) was 0/100. The content of the chlorinated polypropylene (a2) with respect to the solid content of the binder resin (100% by mass) was 15% by mass.
In order to achieve a target gloss of 60 º, an extender pigment as a matte agent instead of resin particles was added, and they were sufficiently mixed using a disper to obtain a matte coating (X).
Then, similarly to Example 1, the obtained matte coating (X) was evaluated. The results are shown in Table 1.
[Table 1]

Table 1

| | Example | Comparative Example | | | | | | | | |
|---|---|---|---|---|---|---|---|---|---|---|
| | 1 | 1 | 2 | 3 | 4 | 5 | 6 | 7 | 8 | 9 |
| In a total of (a1)+(c)+(b) (100% by mass) | | | | | | | | | | |
| Urethane resin (b) (% by mass) | 40 | 60 | 30 | 40 | 40 | 40 | 40 | 40 | 40 | 0 |
| Acrylic resin (a1)+ Compatibilizer (c) (% by mass) | 60 | 40 | 70 | 60 | 60 | 60 | 60 | 60 | 60 | 100 |
| In a binder resin (100% by mass) | | | | | | | | | | |
| Chlorinated polypropylene (a2) (% by mass) | 15 | 15 | 15 | 8 | 30 | 15 | 15 | 15 | 15 | 15 |
| To 100 parts by mass of a binder resin | | | | | | | | | | |
| Medium class acrylic resin particles (parts by mass) | 30 | 30 | 30 | 30 | 30 | | | 20 | 45 | |
| Soft acrylic resin particles (parts by mass) | | | | | | 30 | | | | |
| Hard acrylic resin particles (parts by mass) | | | | | | | 30 | | | |
| 60° gloss value | 1.0 | 1.0 | 1.0 | 1.0 | 1.0 | 1.0 | 1.0 | 3.0 | 0.5 | 1.0 |
| Appearance of a coated film | Good | Good | Good | Good | Good | Good | Good | Irregularity | Good | Good |
| Adhesion — PP material | Excellent | Bad | Excellent | Bad | Excellent | Excellent | Excellent | Excellent | Excellent | Excellent |
| Adhesion — TPO material | Excellent | Excellent | Fair | Bad | Excellent | Bad | Excellent | Excellent | Fair | Bad |
| Flexibility | Excellent | Excellent | Bad | Fair | Excellent | Excellent | Fair | Excellent | Fair | Bad |
| Anti-damage properties — Appearance | Excellent | Excellent | Fair | Excellent | Excellent | Fair | Bad | Fair | Fair | Bad |
| Anti-damage properties — Recovery properties | Excellent | Excellent | Fair | Excellent | Excellent | Fair | Bad | Fair | Excellent | Bad |
| Anti-staining properties to fat and fatty acid — PP material | Excellent | Bad | Excellent | Bad | Bad | Excellent | Excellent | Excellent | Bad | Excellent |

EP 1 734 089 B1

**EP 1 734 089 B1**

INDUSTRIAL APPLICABILITY

The matte coating composition of the present invention is excellent in adhesion to polyolefin material. The coated film made of the matte coating composition is excellent in anti-damage properties and therefore this can keep matte effects for a long period. The matte coating composition of the present invention is preferably used as a matte treatment of interior materials for automobiles.

**Claims**

1. A matte coating composition comprising a binder resin including acrylic modified chlorinated polypropylene (a), urethane resin (b), and a compatibilizer (c), and urethane resin particles (d),
wherein an average 10% strength of the urethane resin particles (d) is in a range from 0.25 to 1.50 kgf/mm$^2$;
the acrylic modified chlorinated polypropylene (a) contains acrylic resin (a1) and chlorinated polypropylene (a2);
when a total content of the acrylic resin (a1), the compatibilizer (c), and the urethane resin (b) is 100% by mass, a total content of the acrylic resin (a1) and the compatibilizer (c) is in a range from 50 to 65% by mass, and a content of the urethane resin (b) is in a range from 35 to 50% by mass; and
when a content of the binder resin is 100% by mass, a content of the chlorinated polypropylene (a2) is in a range from 10 to 25% by mass, and a content of the urethane resin particles (d) is in a range from 25 to 40% by mass.

2. The matte coating composition according to claim 1, wherein an average particle diameter of the urethane resin particles (d) is in a range from 6 to 12 μm.

3. The matte coating composition according to claim 1 or 2, wherein a glass transition temperature of the acrylic resin (a1) is in a range from 60 to 100ºC.

4. The matte coating composition according to any one of claims 1 to 3, wherein a glass transition temperature of the compatibilizer (c) is in a range from 80 to 100ºC, and that the compatibilizer (c) is a comb type polymer having a hydrophilic monomer as a side chain and a hydrophobic monomer as a main chain.

**Patentansprüche**

1. Mattbeschichtungszusammensetzung, welche ein Binderharz umfasst, das acrylmodifiziertes chloriertes Polypropylen (a), Urethanharz (b) und einen Kompatibilitätsvermittler (c) und Urethanharz-Teilchen (d) umfasst,
wobei eine mittlere 10%-Festigkeit der Urethanharz-Teilchen (d) in einem Bereich von 0,25 bis 1,50 kgf/mm$^2$ liegt;
das acrylmodifizierte chlorierte Polypropylen (a) Acrylharz (a1) und chloriertes Polypropylen (a2) enthält;
wenn ein Gesamtanteil des Acrylharzes (a1), des Kompatibilitätsvermittlers (c) und des Urethanharzes (b) 100 Massen-% beträgt, ein Gesamtanteil des Acrylharzes (a1) und des Kompatibilitätsvermittlers (c) in einem Bereich von 50 bis 65 Massen-% liegt und ein Anteil des Urethanharzes (b) in einem Bereich von 35 bis 50 Massen-% liegt; und
wenn ein Anteil des Binderharzes 100 Massen-% beträgt, ein Anteil des chlorierten Polypropylens (a2) in einem Bereich von 10 bis 25 Massen-% liegt und ein Anteil der Urethanharz-Teilchen (d) in einem Bereich von 25 bis 40 Massen-% liegt.

2. Mattbeschichtungszusammensetzung nach Anspruch 1, wobei ein mittlerer Teilchendurchmesser der Urethanharz-Teilchen (d) in einem Bereich von 6 bis 12 μm liegt.

3. Mattbeschichtungszusammensetzung nach Anspruch 1 oder 2, wobei eine Glasübergangstemperatur des Acrylharzes (a1) in einem Bereich von 60 bis 100 °C liegt.

4. Mattbeschichtungszusammensetzung nach einem der Ansprüche 1 bis 3, wobei eine Glasübergangstemperatur des Kompatibilitätsvermittlers (c) in einem Bereich von 80 bis 100 °C liegt, und wobei es sich bei dem Kompatibilitätsvermittler (c) um ein Kammpolymer handelt, welches ein hydrophiles Monomer als Seitenkette und ein hydrophobes Monomer als Hauptkette aufweist.

**Revendications**

1. Composition de couchage mat comprenant une résine liante contenant du polypropylène chloré modifié avec de l'acrylique (a), de la résine uréthanique (b), un compatibilisateur (c) et des particules de résine uréthanique (d), dans laquelle une résistance moyenne de 10 % des particules de résine uréthanique (d) est dans une gamme allant de 0,25 à 1,50 kgf/mm$^2$ ;
le polypropylène chloré modifié avec de l'acrylique (a) contient de la résine acrylique (a1) et du polypropylène chloré (a2) ;
dans laquelle une teneur totale en résine acrylique (a1), en compatibilisateur (c) et en résine uréthanique (b) est de 100 % en masse, une teneur totale en résine acrylique (a1) et en compatibilisateur (c) est dans une gamme allant de 50 à 65 % en masse, et une teneur en résine uréthanique (b) est dans une gamme allant de 35 à 50 % en masse ; et
dans laquelle une teneur en résine liante est de 100 % en masse, une teneur en polypropylène chloré (a2) est dans une gamme allant de 10 à 25 % en masse, et une teneur en particules de résine uréthanique (d) est dans une gamme allant de 25 à 40 % en masse.

2. Composition de couchage mat selon la revendication 1, dans laquelle un diamètre moyen des particules de résine uréthanique (d) est dans une gamme allant de 6 à 12 μm.

3. Composition de couchage mat selon la revendication 1 ou 2, dans laquelle une température de transition vitreuse de la résine acrylique (a1) est dans une gamme allant de 60 à 100 °C.

4. Composition de couchage mat selon l'une quelconque des revendications 1 à 3, dans laquelle une température de transition vitreuse du compatibilisateur (c) est dans une gamme allant de 80 à 100 °C et dans laquelle le compatibilisateur (c) est un polymère en peigne ayant un monomère hydrophile en tant que chaîne latérale et un monomère hydrophobe en tant que chaîne principale.

## FIG. 1

## FIG. 2

## FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI0776646 B